# EUROPEAN PATENT APPLICATION

(11) **EP 3 926 808 A1**
(43) Date of publication of application: **22.12.2021**
(21) Application number: 20179936.8
(22) Date of filing: 15.06.2020
(51) Int. Cl.: H02M 3/335, H02M 1/00

(54) **A SYNCHRONOUS FLYBACK CONVERTER**

(71) Applicant: Tridonic GmbH & Co. KG, 6851 Dornbirn (AT)
(72) Inventor: Klotz, Reimar, 6850 Dornbirn (AT)
(74) Representative: Rupp, Christian

(57) **Abstract**

A synchronous flyback converter (100) comprises:
- a first control circuit (101) configured to:
a) control a periodic switching of a primary side switch (102), preferably a MOSFET switch, and a secondary side switch (104);
b) measure a level of a drain source voltage Δt discharge of the primary side switch (102); and
c) control the primary side switch (102) to be turned on, when said monitored drain source voltage falls below a given voltage level;

- a second control circuit (103) configured to:
in case the time duration Δt of the drain source voltage Vds of the first switch (102) dropping below said given voltage value is outside a predetermined range, supply the first control circuit (101) with a modified primary side current value Imax at which the first control circuit (101) switches off the primary side switch (102).

## Description

### TECHNICAL FIELD OF THE INVENTION

The present invention relates to a synchronous flyback converter, a LED converter with such flyback converter, and a method for operating at least one LED, using such flyback.

### BACKGROUND OF THE INVENTION

LED modules are operated by operating devices, which make use of known converters. These devices are configured to provide a load voltage adapted to the LED modules such that the LED modules can be operated from a predetermined input voltage, such as a DC bus voltage or a mains AC voltage, wherein the input voltage is not directly connected to the operating LED modules.

Synchronous flyback converters accomplish this by means of two switching mechanisms, such as transistors, which are configured to control a power flow through an energy storage, e.g. a magnetic energy storage.

The drive frequency of the two switching mechanisms can change as a function of a current which is needed in order for the LED module to be operated. For example, in a dimming operation of the LED module, the drive frequency can be of the order of 100 kHz.

However, known synchronous (sync) flyback converters comprise also other circuit components such as inductors or capacitors with corresponding frequency losses which can cause an inaccurate control of the synchronous flyback converter.

Moreover, the secondary side current of the sync flyback converter can be feedback controlled in order to have a stable light output of lighting means supplied by the secondary side of the sync flyback converter.

As also known in the art, the secondary side current is not necessarily detected directly, but rather estimated on the basis of primary side parameters of the sync flyback converter. This has the advantage that no secondary side measurement signal has to be made to cross the isolation barrier in order to supply it to a primary side control unit.

The e.g. PI based feedback control for the secondary side current, using the indirectly estimated secondary side current as feedback signal, uses the time duration of the secondary side switch in order to feedback control the secondary side current. Typically, the longer a secondary side switch of the synch flyback is made conducting, the more negative current will flow on the secondary side and, thus, energy will be send back to the primary side thus reducing, in the time average, the energy transferred to the secondary side and, thus, also reducing the secondary side current.

However, the control strategy has the disadvantage that a high negative energy transfer (high negative peak of the secondary side current) may occur, which can lead to an inefficient operation mode of the sync flyback converter.

Thus, it is an objective to provide an improved synchronous flyback converter.

### SUMMARY OF THE INVENTION

The object of the present invention is achieved by the solution provided in the enclosed independent claims.

Advantageous implementations of the present invention are further defined in the dependent claims.

A first aspect relates to a synchronous flyback converter, comprising:
- a first control circuit configured to:
   a.) control a periodic switching of a primary side switch, preferably a MOSFET switch, and a secondary side switch;
   b.) measure directly or indirectly a level of a drain source voltage Δt discharge of the primary side switch; and
   c.) measure a time duration Δt of the drain-source voltage discharge to falling to a said given voltage value, preferably the zero level,
- a second control circuit configured to:
   d.) being supplied with the time duration Δt from the first control circuitry, and
   e.) in case the time duration Δt is outside a predetermined range, supply the first control circuit with a modified primary side current value Imax at which the first control circuit switches off the primary side switch.
   The first control circuit may be an ASIC and/or the second control circuit may be a microcontroller.
   The synchronous flyback converter may comprise a first diode representing a first drain-body diode of the primary side MOSFET switch and a second diode representing a second drain-body diode of the secondary side MOSFET switch.
   The synchronous flyback converter may be operated in a continuous conduction mode, wherein a secondary side peak current is negative at a time the secondary side switch is turned off.
   If the time duration Δt is lower than a first predetermined value, than the second control circuit is configured to supply the first control circuitry with a reduced value of the primary side peak current Imax.
   If the time duration Δt is higher than a second predetermined value, than the second control circuit is configured to supply the first control circuitry with an increased value of the primary side peak current Imax.
   The preset range for the time duration Δt is dependent on temperature and/or an average output current and/or on the secondary side voltage.

Furthermore a method for controlling a synchronous flyback converter supplying lighting means is proposed, such as at least one LED,
the method comprising the steps of:
a.) controlling a periodic switching of a primary side switch (102), preferably a MOSFET switch, and a secondary side switch;
b.) measuring directly or indirectly a level of a drain source voltage Δt discharge of the primary side switch; and
c.) measuring a time duration Δt of the drain-source voltage discharge to falling to a said given voltage value, preferably the zero level,
d.) in case the time duration Δt is outside a predetermined range, modifying a primary side current value Imax at which the primary side switch (102) is switched off.

According to another aspect, the invention relates to a synchronous flyback converter, comprising:
- a first control circuit configured to control a periodic switching of a primary side MOSFET switch, monitor a level of a drain source voltage discharge of the primary side MOSFET switch and control the primary side MOSFET switch to be turned on, when said monitored drain source voltage discharge reaches a zero voltage level;
- a second control circuit configured to measure a time duration Δt of the drain source voltage discharge to the zero level and in case said time duration Δt is outside a predetermined range, control the first control circuit to adapt directly or indirectly a tₒₙ time duration of the turn on time period of the primary side MOSFET switch.

The first and second control circuit may be part of or integrated in one circuitry.

This provides the advantage that a simple way to control the primary peak current is provided, so that the sync flyback converter operates efficiently.

Moreover, the use of a cheap and indirect average secondary current approximation is provided that can be used in the first control circuit.

Additionally, it provides an easy way to adjust the primary peak current so that the converter operates in an efficient point.

In an embodiment, the first control circuit adapts indirectly the tₒₙ time duration of the switch by modifying a switch off current threshold of the primary side MOSFET switch.

In an embodiment, the first control circuit is an ASIC and/or the second control circuit is a microcontroller.

In an embodiment, the synchronous flyback converter further comprises a secondary side MOSFET switch.

In an embodiment, the synchronous flyback converter comprises a first diode representing a first drain-body diode of the primary side MOSFET and a second diode representing a second drain-body diode of the secondary side MOSFET.

In an embodiment, the primary side MOSFET switch or the secondary side MOSFET switch is an insulated-gate bipolar transistor (IGBT) switch connected in parallel to a diode.

In an embodiment, the synchronous flyback converter is operated in a continuous conduction mode (CCM), wherein a secondary side peak current is negative at a time the secondary side switch is turned off.

In an embodiment, the first control circuit is configured to determine a value of the time duration Δt and to communicate to the second control circuit the value of the time duration Δt.

In an embodiment, the synchronous flyback converter further comprises a secondary side capacitor configured to smooth an output voltage of the synchronous flyback converter.

In an embodiment, the second control circuit is configured to adjust a primary side peak current based on the time duration Δt.

In an embodiment, if the time duration Δt is lower than a first predetermined value, than the second control circuit is configured to reduce a value of the primary side peak current.

In an embodiment, if the time duration Δt is higher than a second predetermined value, than the second control circuit is configured to increase a value of the primary side peak current.

In an embodiment, the time duration Δt is dependent on temperature and/or an average output current and/or on the secondary side voltage.

According to a second aspect, the invention relates to a method for controlling a synchronous flyback converter, comprising: controlling a periodic switching of a primary side MOSFET switch, monitoring a level of a drain source voltage discharge of the primary side MOSFET, controlling the primary side MOSFET switch to be turned on, when said monitored drain source voltage discharge reaches a zero voltage level, measuring a time duration Δt of the drain source voltage discharge to the zero level and, in case said time duration Δt is outside a predetermined range, adapting directly or indirectly a tₒₙ time duration of a turned on time period of primary side MOSFET switch.

### BRIEF DESCRIPTION OF THE DRAWINGS

The invention will now be explained in the followings together with the figures.
- Fig. 1: shows an embodiment of a synchronous flyback converter;
- Fig. 2: shows an embodiment of a synchronous flyback converter;
- Fig. 3: shows a current of a primary side MOSFET and of a secondary side MOSFET as a function of time in a synchronous flyback converter according to an embodiment;
- Fig. 4: shows a current of a primary side MOSFET and of a secondary side MOSFET as a function of time in a synchronous flyback converter according to an embodiment;
- Fig. 5: shows a discharge voltage of a capacity of a primary side MOSFET as a function of time in a synchronous flyback converter according to an embodiment;
- Fig. 6: shows an operational amplifier (opamp) (a) and a discharge voltage (b) of a capacity of a primary side MOSFET as a function of time in a synchronous flyback converter according to an embodiment;
- Fig. 7: shows a schematic representation of a communication between a first control circuit, a second control circuit and a module sFLB of a synchronous flyback converter according to an embodiment;
- Fig. 8: shows a discharge voltage of a capacity of a primary side MOSFET as a function of time in a synchronous flyback converter according to an embodiment;
- Fig. 9: shows a current of a primary side MOSFET and of a secondary side MOSFET as a function of time in a synchronous flyback converter according to an embodiment; and
- Fig. 10: shows a method for controlling a synchronous flyback converter according to an embodiment.

### DETAILED DESCRIPTION OF THE PREFERRED EMBODIMENTS

Aspects of the present invention are described herein in the context of a synchronous flyback converter.

The present invention is described more fully hereinafter with reference to the accompanying drawings, in which various aspects of the present invention are shown. This invention however may be embodied in many different forms and should not be construed as limited to the various aspects of the present invention presented through this disclosure. Rather, these aspects are provided so that this disclosure will be thorough and complete, and will fully convey the scope of the present invention to those skilled in the art. The various aspects of the present invention illustrated in the drawings may not be drawn to scale. Rather, the dimensions of the various features may be expanded or reduced for clarity. In addition, some of the drawings may be simplified for clarity. Thus, the drawings may not depict all of the components of a given apparatus.

Various aspects of a synchronous flyback converter will be presented. However, as those skilled in the art will readily appreciate, these aspects may be extended to aspects of a synchronous flyback converter without departing from the invention.

The term "LED luminaire" shall mean a luminaire with a light source comprising one or more LEDs. LEDs are well-known in the art, and therefore, will only briefly be discussed to provide a complete description of the invention.

It is further understood that the aspect of the present invention might contain integrated circuits that are readily manufacturable using conventional semiconductor technologies, such as complementary metal-oxide semiconductor technology, short "CMOS". In addition, the aspects of the present invention may be implemented with other manufacturing processes for making optical as well as electrical devices. Reference will now be made in detail to implementations of the exemplary aspects as illustrated in the accompanying drawings. The same references signs will be used throughout the drawings and the following detailed descriptions to refer to the same or like parts.

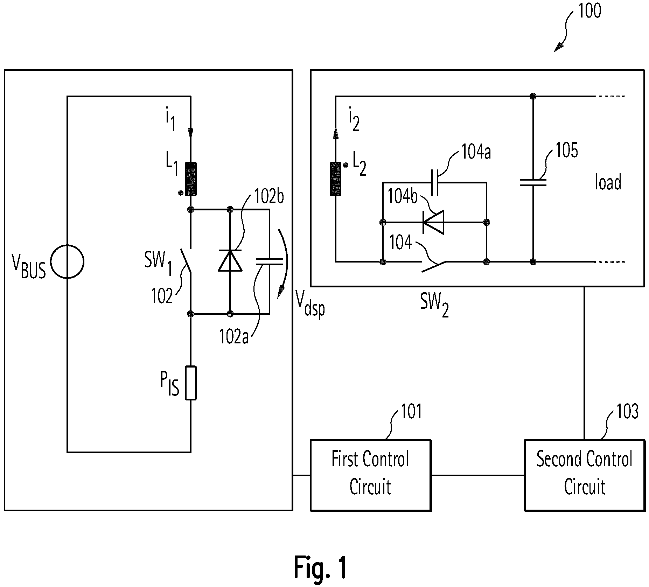

Fig. 1 shows an embodiment of a synchronous flyback converter 100.

The synchronous flyback converter 100 comprises a first control circuit 101, which may be e.g. an ASIC, controlling a periodic switching of a primary side (e.g. MOSFET) switch 102. The first control circuit furthermore controls a secondary side switch SW2.

The first control circuit measures directly or indirectly the level of a drain source voltage discharge Vds of the primary side switch 102. The first control circuit 101 controls the primary side MOSFET switch 102 to be turned on, when said monitored drain source voltage discharge Vds reaches a zero voltage level (thus implementing a zero voltage switching-on).

Furthermore, the first control circuit measures the discharge time of the of the drain-source voltage of the primary side switch or alternative proportional voltage,
by measuring the time between the secondary side switch and the moment the drain-source voltage falls under a certain level.

Moreover, the synchronous flyback converter 100 comprises a second control circuit 103, which may be a microcontroller, which measures or receives from the first control circuit 101 an information on the time duration t_{DS0} of the drain source voltage discharge Vds falling below a given value ("zero level"). In case said time duration t_{DS0} is outside a predetermined range, the second control circuit 102 controls the first control circuit to adapt directly or indirectly a tₒₙ time duration of the turned on time period of the primary side MOSFET switch 102.

In an embodiment, the first control circuit 101 adapts indirectly the tₒₙ time duration of the switch 102. In this case the second control circuit 103 may send a modified switch off current threshold Iₘₐₓ to the primary side MOSFET switch 102, in response to the detection of the time duration t_{DS0} of the drain source voltage discharge Vds to the zero level being outside said predetermined range.

Thus, the first control circuit 101 is designed to
- Perform a control of the switches 102 and 104
- Wherein the switch 102 is only switched-on when the drain source voltage Vds is low, and
- Switches off the switch 102 when the detected current through the switch 102 reaches a preset value Imax, or when a preset time period has lapsed,
- (the second control circuit 103 may modify said value Imax in case the time duration of the drain source discharge, monitored by the first control circuitry 101) is outside a given value,
- Wherein the first control circuit 101 controls the Ton time duration of the secondary switch 104 as a function of a target value Iled_target supplied to the first control circuit.

In an embodiment, the synchronous flyback converter 100 further comprises a secondary side capacitor 105 configured to smooth an output voltage of the synchronous flyback converter 100.

Furthermore, the synchronous flyback converter 100 can be supplied by the voltage V_{BUS} and can be configured to supply at its output a load, such as an LEDload or a further converter stage, with a DC voltage-.

For the sake of completeness, in the following a summary of the operation of the converter 100 is given:
1. pFET phase:
   In the first phase, the switch SW1 102 is turned on, and the switch SW2 104 is off; the current through the switch 102 rises until the value Imax is reached and the switch 102 is switched off.
2. t_{dead} pfsr (primary fall secondary rise) phase:
   The second phase is the t_{dead} phase, where both switches are off after the switching-off of switch 102. Through the diode 104b in the secondary side the current can commutate already in this phase;
3. sFET phase:
   The primary switch SW1 102 is still off and the secondary switch SW2 104 is switched-on. At the end of this phase the current is negative; and
4. tdead_sfpr (secondary fall primary rise) phase:
   The second phase is the tdead phase were both switches 102 and 104 are off. Through the negative current at the end of the phase 3 the capacity 102a on switch SW1 102 gets discharged - this leads to zero volt switching. The negative current of the secondary side commutates in this phase to the primary side. The primary side drain-source capacitor gets discharged (flows through the capacitor). After that, the current can flow over the diode (in MOSFET parasitic). During the t_{dead_sfpr}, negative current can also flow through the body diode of the primary side MOSFET also when the MOSFET is not turned on, so it is also conducting. Moreover, during the t_{dead_sfpr}, the secondary current commutates from the secondary side to the primary side. Through this negative current, the drain-source capacitance 102a is discharged. This time is also an indicator for the negative peak current at the secondary side. This peak current can be determined via the t_{DS0} time and, if needed, the voltage V_{led} through a function or a look-up table.

The source drain voltage of the primary side switch 102 of the sync flyback is monitored. The negative secondary side current can lead to a reduction of the drain source voltage, which is already used in order to find an appropriate switching on time for the primary side switch 102.

The higher the secondary side negative current peak, the shorter the time duration for the discharging of the drain source voltage.

Thus, the microcontroller or second control circuit 103 of the converter 100 obtains the time duration Δt of the drain source voltage discharge (as an indirect measurement for the secondary side negative current peak) from the first control circuit 101.

In case the time duration Δt (and, thus, the secondary side negative current peak) are outside a desired range, the second control circuit 103 sets the first control circuit 101 controlling the preferably PI feedback control of the sync flyback to a different operation point, i.e. by changing to a different primary side current peak Imax, corresponding to the peak current at which the first control circuit makes the primary side switch 102 non-conducting.

Generally, if the time duration t_{DS0} of the discharge of the drain source voltage Δt of the primary side switch 102 is undershoots the preset time duration (and thus the indirectly measured secondary side negative current peak to high), the the PI feedback control done by the first control circuit 101 is set to a lower peak current Imax.

Thus, according to an embodiment, the known PI feedback control is maintained. However, the secondary side negative current peak is indirectly monitored in order to avoid inefficient operation regimes of the PI controller which may especially occur due to the fact that the secondary side current is not directly measured but estimated based on primary side parameters.

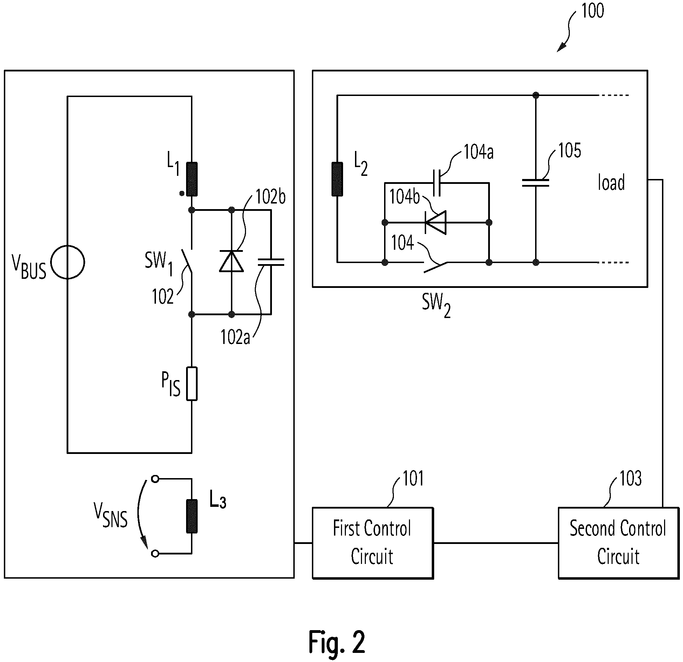

Fig. 2 shows an embodiment of the synchronous flyback converter 100.

In this embodiment, the synchronous flyback converter 100 comprises the same component as in the embodiment shown in Fig. 1, and moreover comprises an additional winding L3 magnetically coupled to the other two windings L1 and L2.

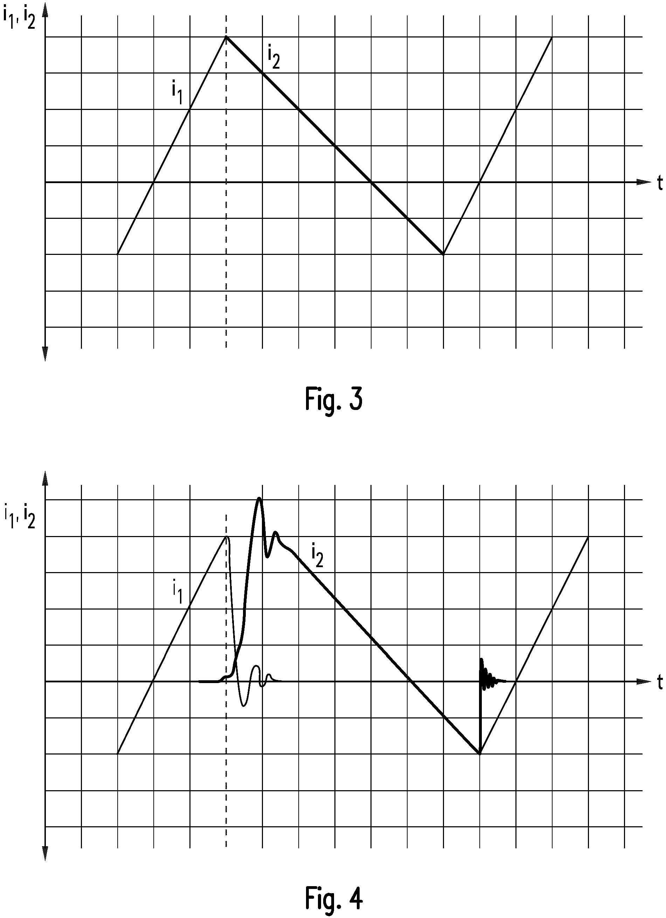

Fig. 3 shows a current of a primary side MOSFET i1 and of a secondary side MOSFET i2 as a function of time t in the synchronous flyback converter 100 according to an embodiment.

In an embodiment, the synchronous flyback converter 100 is operated in a continuous conduction mode (CCM), wherein a secondary side peak current is negative at a time the secondary side switch 104 is turned off.

In particular, in Fig. 3, the case of an ideal current wave form is shown, while, in Fig. 4, a real current wave form of the current of the primary side MOSFET i1 and of the secondary side MOSFET i2 is shown as a function of time t in the synchronous flyback converter 100 according to an embodiment.

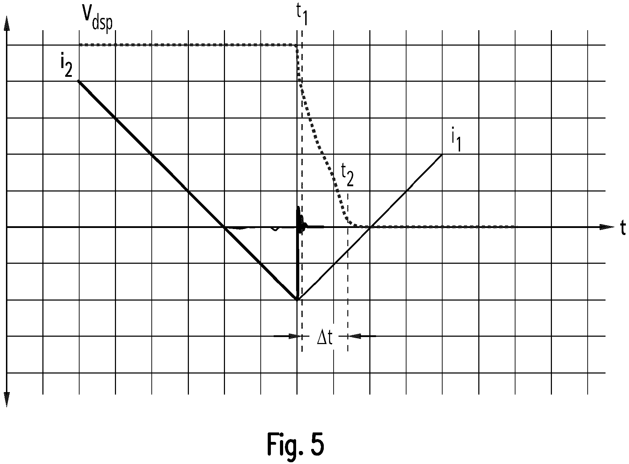

Fig. 5 shows a discharge voltage V_{dsp} of the capacity 102a of the primary side MOSFET 102 as a function of time in the synchronous flyback converter 100 according to an embodiment.

In this embodiment, in the time interval [0, t1], the primary side MOSFET switch 102 is switched off and is in a non-conducting configuration, while, in the time interval [t1, t2], the primary side MOSFET switch 102 is switched on and it is in a conducting configuration.

During the switch on phase Δt of the primary side MOSFET 102, a discharge decay of the discharge voltage V_{dsp} takes place and the current i1 increases.

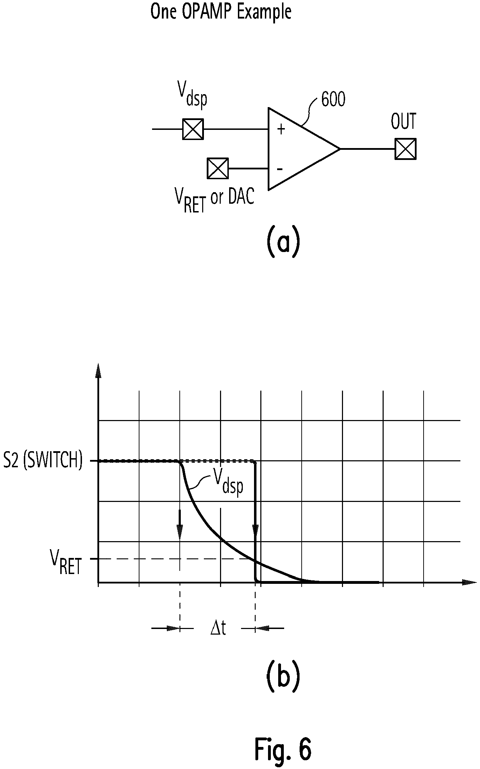

Fig. 6 shows an operational amplifier (opamp) 600 and a discharge voltage V_{dsp} of a capacity 102a of a primary side MOSFET 102 as a function of time t in a synchronous flyback converter 100 according to an embodiment.

In an embodiment, the synchronous flyback converter 100 can further comprise an opamp 600 in order to dynamically adjust a the t_{dead,sfpr} time which is dependent on a peak current of the secondary side MOSFET 104.

In the opamp 600, the V_{DSP} is coupled to the non-inverting input (+), while a reference voltage V_{RET} is coupled to the inverting input (-).

In Fig. 6 (b), the schematic behavior of the voltages V_{DSP} and V_{RET} is shown as a function of time t.

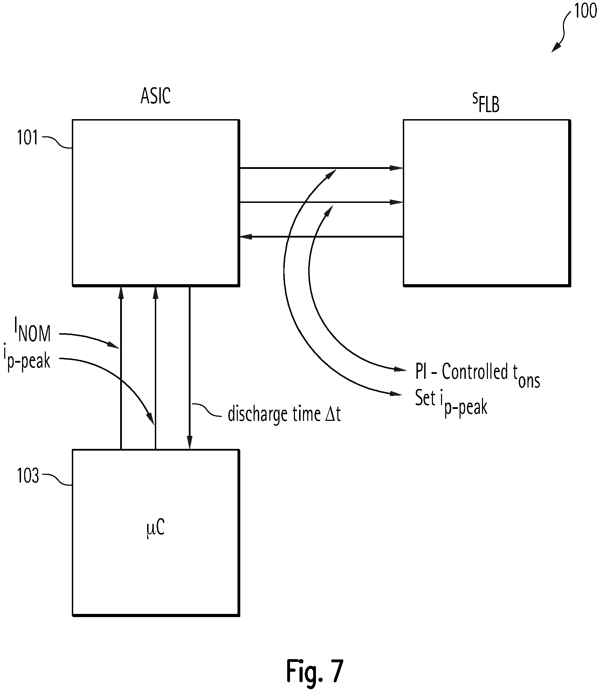

Fig. 7 shows a schematic representation of a communication between the first control circuit 101, the second control circuit 103 and a module sFLB of the synchronous flyback converter 100 according to an embodiment.

In this embodiment, the first control circuit 101 is an ASIC and the second control circuit 103 is a microcontroller.

Moreover, the second control circuit 103 can be configured to adjust a primary side peak current based on the time duration Δt.

In particular, if the time duration Δt is lower than a first predetermined value, than the second control circuit 103 can be configured to reduce a value of the primary side peak current. Furthermore, if the time duration Δt is higher than a second predetermined value, than the second control circuit 103 can be configured to increase a value of the primary side peak current.

The time duration Δt can be dependent on temperature and/or an average output current and/or on the secondary side voltage.

Moreover, in order to avoid a complex and difficult to verify multi-output control system, that adjusts i_{p_peak} and tₒₙₛ, the module sFLB can be configured to use a PI- or I-control that controls the tₒₙₛ (secondary switch on time) value through a set output current.

The nominal current of the sFLB can be controlled over the uC and controlled over the ASIC through the tₒₙₛ. The ASIC can control the tₒₙₛ time, the primary peak can be controlled over the more flexible microcontroller.

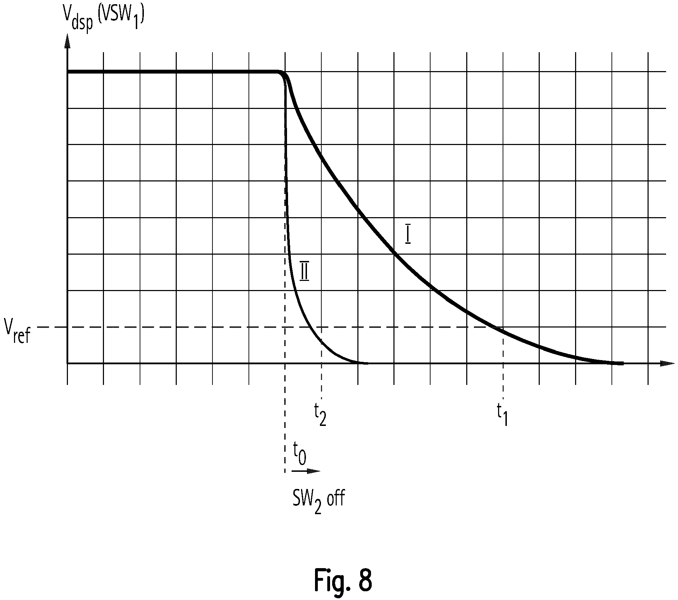

Fig. 8 shows the discharge voltage V_{dsp} of the capacity of the primary side MOSFET 102 as a function of time t in the synchronous flyback converter 100 according to an embodiment.

The microcontroller can control the discharge time of the primary switch to a defined level over the adjustment of the primary peak current.

Moreover, there is a fast control system implemented in the ASIC which gets set over a nominal current through the µC. This output current can be realized with different primary peak adjustments. The microcontroller can be used as a slow and flexible controller that takes the current discharge time and adjusts, based on that, the peak current so that it is controlled to a defined level.

In particular, in Fig. 8, different load situation are shown: (I) the secondary negative peak is small - slow discharging and (II) the secondary peak is big - fast discharging.

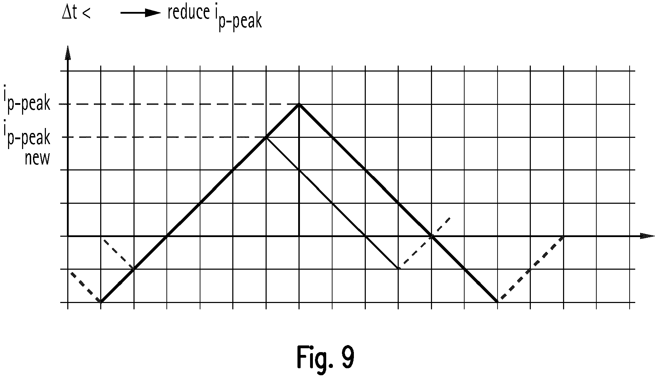

If the discharge time of the primary side MOSFET SW1 capacity 102a is relatively small, then the microcontroller can be configured to lower the primary peak. This leads to an increase of the discharge time (lower core losses and higher switching frequency), as schematically shown in Fig. 9.

If the discharge time is relatively big, then the primary peak gets increased.

In order to further increase the efficiency of the converter 100 and the indirect approximation of the current, the discharging time could be dependent on temperature and/or the average output current and/or the secondary side voltage.

In an embodiment, the user sets a constant output current and a fix discharge time and in such a way the primary peak and the tₒₙₛ get adjusted in a controlled way.

Fig. 9 shows a current of a primary side MOSFET 102 and of a secondary side MOSFET 104 as a function of time t in a synchronous flyback converter 100 according to an embodiment.

As it can be taken from Fig. 9, the ip_peak control based on a fast discharging of the primary side switch SW1 capacity leads to the lowering of the ip_peak.

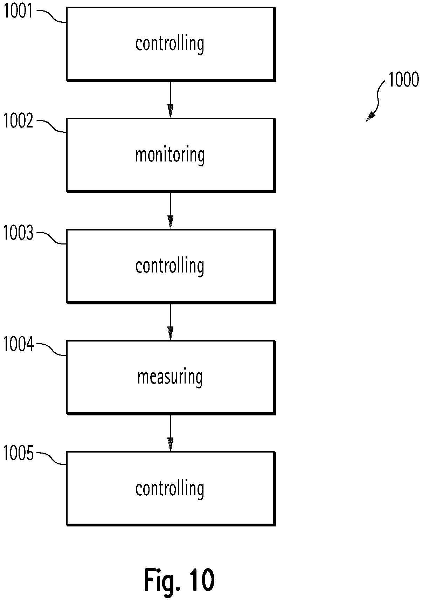

Fig. 10 shows a method 1000 for controlling a synchronous flyback converter 100 according to an embodiment.

The method 1000 for controlling the synchronous flyback converter 100 comprises the steps of:
- controlling 1001 a periodic switching of a primary side MOSFET switch 102;
- monitoring and measuring 1002 a level of a drain source voltage discharge of the primary side MOSFET 102, ;
- controlling 1003 the primary side MOSFET switch to be turned on, when said monitored drain source voltage discharge reaches a zero voltage level;
- measuring 1004 a time duration Δt of the rain source voltage discharge to the zero level; and
- controlling 1005 the first control circuit 101 to adapt directly or indirectly a tₒₙ time duration of the turned on time period of primary side MOSFET switch 102, in case said time duration Δt is outside a predetermined range.

All features of all embodiments described, shown and/or claimed herein can be combined with each other.

While various embodiments of the present invention have been described above, it should be understood that they have been presented by way of example only and not limitation. Numerous changes to the disclosed embodiments can be made in accordance with the disclosure herein without departing from the spirit of scope of the invention. Thus, the breadth and scope of the present invention should not be limited by any of the above-described embodiments. Rather, the scope of the invention should be defined in accordance with the following claims and their equivalence.

Although the invention has been illustrated and described with respect to one or more implementations, equivalent alternations and modifications will occur to those skilled in the art upon the reading of the understanding of the specification and the annexed drawings. In addition, while a particular feature of the invention may have been disclosed with respect to only of the several implementations, such features may be combined with one or more other features of the other implementations as may be desired and advantage for any given or particular application.

## Claims

1. A synchronous flyback converter (100), comprising:
- a first control circuit (101) configured to:
a.) control a periodic switching of a primary side switch (102), preferably a MOSFET switch, and a secondary side switch (104);
b.) measure directly or indirectly a level of a drain source voltage Δt discharge of the primary side switch (102); and
c.) measure a time duration Δt of the drain-source voltage discharge to falling to a said given voltage value, preferably the zero level,
- a second control circuit (103) configured to:
d.) being supplied with the time duration Δt from the first control circuitry (101), and
e.) in case the time duration Δt is outside a predetermined range, supply the first control circuit (101) with a modified primary side current value Imax at which the first control circuit (101) switches off the primary side switch (102).

2. The synchronous flyback converter (100) of claim 1, wherein the first control circuit (101) is an ASIC and/or the second control circuit (103) is a microcontroller.

3. The synchronous flyback converter of claim 1 or 2, wherein the synchronous flyback converter comprises a first diode (102b) representing a first drain-body diode of the primary side MOSFET switch (102) and a second diode (104b) representing a second drain-body diode of the secondary side MOSFET switch (104).

4. The synchronous flyback converter (100) of anyone of the preceding claims, wherein the synchronous flyback converter (100) is operated in a continuous conduction mode (CCM), wherein a secondary side peak current is negative at a time the secondary side switch (104) is turned off.

5. The synchronous flyback converter (100) of any of the preceding claims, wherein, if the time duration Δt is lower than a first predetermined value, than the second control circuit (103) is configured to supply the first control circuitry (101) with a reduced value of the primary side peak current Imax.

6. The synchronous flyback converter (100) of any of the preceding claims, wherein, if the time duration Δt is higher than a second predetermined value, than the second control circuit (103) is configured to supply the first control circuitry (101) with an increased value of the primary side peak current Imax.

7. The synchronous flyback converter (100) of anyone of the preceding claims, wherein the time duration Δt is dependent on temperature and/or an average output current and/or on the secondary side voltage.

8. A LED converter having a flyback converter according to any of the preceding claims.

9. A method (1000) for controlling a synchronous flyback converter (100) supplying lighting means, such as at least one LED,
the method comprising the steps of:
a.) controlling (101) a periodic switching of a primary side switch (102), preferably a MOSFET switch, and a secondary side switch (104);
b.) measuring directly or indirectly a level of a drain source voltage Δt discharge of the primary side switch (102); and
c.) measuring a time duration Δt of the drain-source voltage discharge to falling to a said given voltage value, preferably the zero level,
d.) in case the time duration Δt is outside a predetermined range, modifying a primary side current value Imax at which the primary side switch (102) is switched off.

10. A LED converter implementing the method of claim 9.
